# EUROPÄISCHE PATENTSCHRIFT

(11) **EP 2 165 507 B1**
(45) Veröffentlichungstag und Bekanntmachung des Hinweises auf die Patenterteilung: **07.09.2011**
(21) Anmeldenummer: 08756812.7
(22) Anmeldetag: 10.06.2008
(51) Int. Cl.: H04L 29/06, G06F 21/00, H04L 9/16, H04L 12/407

(54) **VERFAHREN UND ARCHITEKTUR ZUR SICHERUNG VON ECHTZEITDATEN**
METHOD AND ARCHITECTURE FOR SECURING REAL-TIME DATA
PROCÉDÉ ET ARCHITECTURE POUR LA SÉCURISATION DE DONNÉES EN TEMPS RÉEL

(30) Priorität: 11.06.2007 AT 9032007
(43) Veröffentlichungstag der Anmeldung: 24.03.2010
(60) Teilanmeldung: 11005818.7
(73) Patentinhaber: Fts Computertechnik Gmbh, 1040 Wien (AT)
(72) Erfinder: KOPETZ, Hermann, A-2500 Baden (AT)
(74) Vertreter: Patentanwaltskanzlei Matschnig & Forsthuber OG
(86) Internationale Anmeldenummer: PCT/AT2008/000202
(87) Internationale Veröffentlichungsnummer: WO 2008/151339

(56) Entgegenhaltungen:
- WO-A-02/054704
- WO-A-2004/023302
- US-B1- 6 615 350

## Beschreibung

Diese Erfindung betrifft ein Verfahren zur Sicherung der Authentizität, Integrität und Vertraulichkeit von Echtzeitdaten in einem verteilten Echtzeitsystem.

Ein solches Verfahren ist aus der WO 02/054704 A bekannt.

Die zunehmende Öffnung der *Embedded Systeme* und deren Anbindung an das Internet erfordert innovative Verfahren und Architekturen, um die Datensicherheit (Security) dieser Systeme zu gewährleisten. Die vorliegende Erfindung legt ein Verfahren und eine Architektur offen, die die Authentizität und Integrität und in weiterer Folge die Vertraulichkeit der Echtzeitdaten in *Embedded Systems* unter den für diese Systeme charakteristischen Randbedingungen garantiert.

Die für viele *Embedded Systems* charakteristischen Randbedingungen sind:
- Das Hauptproblem der *Security* in Embedded Systems ist die Sicherstellung der *Authentizität* und *Integrität* der Daten, jedoch nicht sosehr deren *Vertraulichtkeit.*
- Die Echtzeitdaten müssen rechtzeitig mit minimaler Verzögerung verarbeitet werden, um die Totzeit im System klein halten zu können und die Qualität der Regelung nicht herabzusetzen.
- Die für die Verschlüsselung der Echtzeitdaten zur Verfügung stehenden Ressourcen sind oft beschränkt.
- Es muss davon ausgegangen werden, dass das Wartungspersonal nicht immer vertrauenswürdig ist.
- Der Aufwand für die Administration der Security muss möglichst gering gehalten werden.

Das vorliegende Verfahren zur Gewährleistung der Authentizität und Integrität von Echtzeitdaten wurde unter Berücksichtigung der folgenden Prinzipien entwickelt:
- Es wird davon ausgegangen, dass alle Kommunikationskanäle öffentlich zugänglich (z.B. drahtlose Verbindungen, die ohne viel Aufwand abgehört werden können) und daher unsicher sind.
- Durch die Security-Mechanismen darf keine zeitliche Verzögerung in der Verarbeitung von Echtzeitdaten auftreten, damit die Qualität der Verarbeitung nicht negativ beeinflusst wird. Der Rechenaufwand für die Sicherung der Echtzeitdaten im Echtzeitbetrieb soll relativ gering sein.
- Echtzeitdaten haben oft eine beschränkte zeitliche Gültigkeit. Die Dauer, während der Echtzeitdaten vertraulich zu behandeln sind, soll einen Einfluss auf den notwendigen Aufwand, der zu deren Verschlüsselung erforderlich ist, haben.
- Es wird angenommen, dass das Personal, welches das Embedded System warten muss, nicht immer als vertrauenswürdig eingestuft werden kann. Die Security Mechanismen müssen auch funktionieren, wenn das Wartungspersonal nicht vertrauenswürdig ist.

Die vorliegende Erfindung hat zum Ziel, in einem verteilten Echtzeitcomputersystem die Authentizität und Integrität der Echtzeitdaten zu sichern. Das vorliegende Verfahren nimmt auf die besonderen Anforderungen der Echtzeitdatenverarbeitung Rücksicht, wie Rechtzeitigkeit der Übertragung von Echtzeitdaten und beschränkte Ressourcenverfügbarkeit. Durch die häufige Änderung eines asymmetrischen Schlüsselpaars wird verhindert, dass ein Angreifer einen Schlüssel knackt bevor er seine Gültigkeit verloren hat. Das vorliegende Verfahren kann auch erweitert werden, um die Vertraulichkeit von Echtzeitdaten sicherzustellen. Es lässt sich auch auf einem Multiprozessor System-on-Chip (MPSoC) effizient implementieren.

Das vorab beschriebene Ziel und andere neue Eigenschaften der vorliegenden Erfindung werden beispielhaft in der angeführten Zeichnung erläutert. In dieser zeigt
Fig. 1 den Aufbau eines verteilten Echtzeitsystems,
Fig. 2 die Arbeitsschritte innerhalb einer Periode des Echtzeitsystems,
Fig. 3 den Aufbau einer Nachricht, und
Fig. 4 die Nachrichtenfolge in der Start-up Phase.

Im folgenden Abschnitt wird eine Realisierung des neuen Verfahrens an einem möglichen Beispiel mit drei Rechnern **111, 112, 113,** einem Security Monitor **114** und einer *Certification Authority* **115** gezeigt. Weiters wird angenommen, dass es ein *Trusted Security Center* (oder eine ihr entsprechende Instanz) gibt, das sensible Start-up Daten sicher bereitstellt, und dass ein Zeitserver vorhanden sein kann, der die Zeit vorgibt.

Alle Rechner, auch die Rechner **111** bis **115,** haben Zugriff auf eine verteilte gemeinsame (sparse) Zeitbasis (siehe [6], Seiten 57, 58). Eine Zeitbasis ist *sparse,* wenn die Zeitbasis aus einer Folge von sich abwechselnden Intervallen der *Aktivität* und der *Ruhe* gebildet wird. Ereignisse, die in der Kontrolle des Systems sind (z.B. das Senden von Nachrichten), dürfen nur in einem Intervall der Aktivität stattfinden. Alle Ereignisse, die innerhalb des selben Aktivitätsintervalls auftreten, werden als gleichzeitig betrachtet. Ereignisse, die in verschiedenen Aktivitätsintervallen auftreten, sind in einer systemweit konsistenten zeitlichen Ordnung. Die Einführung der sparse Zeitbasis ermöglicht es, die Gleichzeitigkeit und die zeitliche Ordnung von Ereignissen systemweit konsistent festzustellen. Die Dauer des Aktivitätsintervalls und des Ruheintervalls wird von der Genauigkeit der gegebenen Uhrensynchronisation bestimmt. Die Uhrensynchronisation kann entweder zentral von einem Zeitserver durchgeführt werden, oder verteilt über einen fehlertoleranten Algorithmus realisiert werden. Ein Zeitserver ist ein Rechner, der entweder über eine genaue interne Zeitbasis verfügt und/oder Zugriff auf ein externs Zeitsignal, z.B, das GPS (General Positioning System) Signal hat, und der die Referenzeit vorgibt. Entsprechend dem vorgeschlagenen Verfahren können die Nachrichten, die die Zeitvorgabe enthalten, verschlüsselt sein.

Sowohl das Thema der sparse Zeitbasis wie auch der zentralen und verteilten Uhrensynchronisation sind in [6] ausführlich behandelt.

Das vorgeschlagene Verfahren basiert auf dem Einsatz eines *asymmetrischen Kryptosystems,* dem 1977 veröffentlichen RSA Verfahren [4], das nach seinen Erfindern Ronald L. Rivest, Adi Shamir und Leonard Adleman benannt ist. Im RSA Verfahren wird ein Schlüsselpaar generiert, wobei ein geheimer Schlüssel vom Ersteller der Daten zur Generierung einer *Signatur* verwendet und der dazugehörige öffentliche Schlüssel der Öffentlichkeit zur *Überprüfung der Signatur* zur Verfügung gestellt wird, um die Authentizität und Integrität der Daten überprüfen zu können. Es wird davon ausgegangen, dass der private Schlüssel nur mit sehr hohem Aufwand aus dem öffentlichen Schlüssel rekonstruiert werden kann. Die Generierung der Schlüssel erfolgt im RSA Verfahren durch die algebraische Manipulation großer Primzahlen. Der Aufwand (der sich in der benötigten Zeit äußert) für die Erstellung der Signatur und der Überprüfung der Signatur ist umso größer, je länger die Schlüssel sind. Jedoch ist auch die Sicherheit, d.h. die Zeit bis ein Schlüssel geknackt werden kann, umso größer, je länger der Schlüssel ist.

Das hier vorgestellte Verfahren verwendet in der Start-up Phase lange asymmetrische Schlüsselpaare und im Echtzeitbetrieb relativ kurze asymmetrische Schlüsselpaare und ändert diese kurzen Schlüsselpaare häufig. Damit wird im Echtzeitbetrieb der Aufwand und die benötige Zeit für die Ver- und Entschlüsselung gering gehalten, was in Echtzeitsystemen sehr wichtig ist. Die Länge des Schlüssels wird so gewählt, dass ein Angreifer innerhalb der Gültigkeitszeit eines Schlüssels kaum eine Chance hat, den Schlüssel zu knacken. Andere Verfahren, zum Beispiel das in [1] veröffentlichte Verfahren *(Method for real-time data authentication),* verwenden Schlüsselhierarchien mit langen Schlüsseln, um die Sicherheit zu erhöhen ohne auf die Rechtzeitigkeit der Daten explizit Bezug zu nehmen. Im vorgestellten Verfahren werden in der Start-up Phase lange Schlüssel verwendet, um einer *Certification Authority* **115** die unmittelbar nach dem Startup gültige Assoziation zwischen Sender-IDs und den öffentlichen Entschlüsselungsschlüsseln der Rechner authentisch und sicher mitteilen zu können.

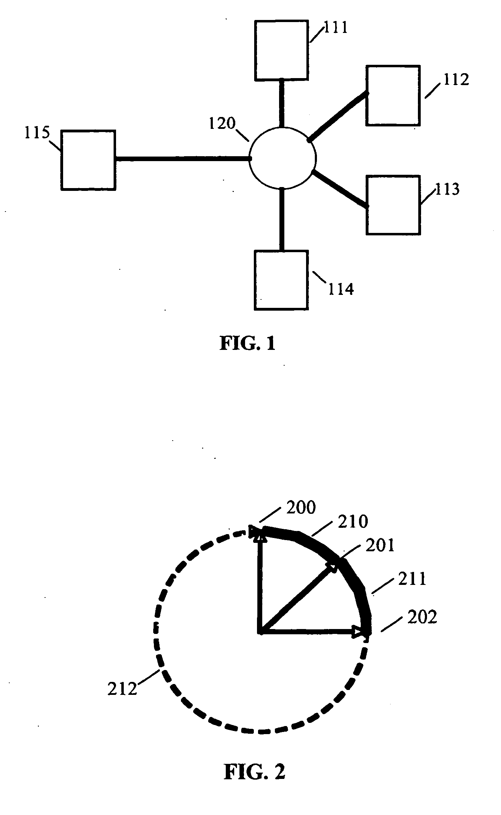

In Fig. 1 ist die Struktur eines typischen verteilten Echtzeitsystems dargestellt. Es wird angenommen, dass alle Rechner Zugriff auf eine globale Zeit haben, die z.B. mittels des IEEE Standards 1588 [5] aufgebaut werden kann und mittels des hier beschriebenen Verfahrens sicher verteilt wird. Im Beispiel der Fig. 1 erfasst der Rechner **111** Echtzeitdaten. Diese Echtzeitdaten werden über das Echtzeitkommunikationssystem **120** an den Verarbeitungs-Rechner **112** weitergeleitet. Dieses Echtzeitkommunikationssystem kann auf der Basis von Ethernet [3] oder TT Ethernet [2] oder einem anderen Echtzeitkommunikationssystem funktionieren. Nach der Verarbeitung sendet der Verarbeitungs-Rechner **112** über das Echtzeitkommunikationssystem **120** die Stellgrößen an den Rechner **113** zur Ausgabe an den zu regelnden technischen Prozess. Der Rechner **114** ist ein *Security Monitor,* der die Sicherheit der sensiblen Echtzeitnachrichten, d.s. Nachrichten, deren Inhalt auf Integrität und Authentizität geprüft werden müssen, überprüft. Der Security Monitor **114** bekommt vom Kommunikationssystem **120** eine Kopie aller *sensiblen* Nachrichten. Eine Nachricht ist *authentisch und integer,* wenn die Signatur der Nachricht, die vom authorisierten Sender mit dem geheimen Teil eines asymmetrischen Schlüsselpaars errechnet wurde, mit dem Inhalt der Nachricht übereinstimmt, wobei die Überprüfung mittels des öffentlichen Teils dieses asymmetrischen Schlüsselpaars erfolgt. Durch diese Trennung der Verarbeitungsfunktion in den Rechnern **112** und **113** von der Security-Überprüfungsfunktion im Rechner **114** wird erreicht, dass der Verarbeitungsaufwand (und damit die Verarbeitungszeit) in den Rechner **112** und **113** innerhalb der zeitlichen kritischen Regelschleife durch die Sicherungsmaßnahmen nicht erhöht wird. Damit wird verhindert, dass die Sicherheitsüberprüfung negative Auswirkungen auf die Qualität einer Regelschleife hat.

In Fig. 2 ist der zeitliche Ablauf einer Periode im Datenerfassungsrechner **111** in zyklischer Form dargestellt. Zu Beginn jeder Periode **200** wird mit der Erfassung der variablen Echtzeitdaten einer *Beobachtung* begonnen. Eine *Beobachtung* ist ein atomares Triple, bestehend aus dem Namen der Beobachtung, dem Zeitpunkt der Beobachtung und dem Wert der Beobachtung, der innerhalb seiner Gültigkeitszeit verarbeitet werden muss [6]. Im Intervall **210** werden die erfassten Daten vorverarbeitet und zum Zeitpunkt **201** wird mit der Übertragung der Daten an den Verarbeitungs-Rechner **112** und dem Security Monitor **114** begonnen. Erfindungsgemäß wird in dem Zeitintervall **211** zwischen den Zeitpunkten **201** und **202** eine Signatur über die Beobachtung mittels des zu diesem Zeitpunkt gültigen geheimen Verschlüsselungsschlüssels errechnet. Diese Signatur wird in die Echtzeitnachricht der nächst folgenden Periode eingebettet. Der Security Monitor **114** überprüft, nachdem er in der nächsten Periode die Signatur der vorab empfangenen Echtzeitnachricht erhalten hat, mit dem ihm bekannten öffentlichen Schlüssel, ob die Signatur mit dem Inhalt der vorab empfangenen Echtzeitnachricht übereinstimmt. Der öffentliche Schlüssel, mittels dessen die Signatur überprüft wird, kann auch direkt in der Echtzeitnachricht enthalten sein. Der Security Monitor sendet periodisch eine gesicherte Echtzeitnachricht über die Ergebnisse der Security-Überprüfung an die *Certification Authority* **115** oder eine andere Instanz, der die Security Verwaltung obliegt.

Nach der Berechnung der Signatur über die vorangegangene Beobachtung beginnt der Rechner **111** zum Zeitpunkt **202** mit der Berechnung eines neuen asymmetrischen Schlüsselpaars. Als Ausgangspunkt für die Berechnung des neuen Schlüsselpaares wird eine Funktion über das Bitmuster des Berechnungsstartzeitpunkts genommen, da sich dieses Bitmuster der Zeitdarstellung innerhalb der Lebensdauer eines Systems nicht wiederholt. Da die Berechnung eines neuen Schlüsselpaars aufwendig ist und innerhalb eines Intervalls **212** vor dem nächsten Datenerfassungszeitpunkts 200 nicht abgeschlossen sein wird, wird diese Background Berechnung am Beginn der nächsten Periode zum Zeitpunkt **200** unterbrochen, um die in der nächsten Periode anfallenden Echtzeitaufgaben rechtzeitig erledigen zu können. Nach Fertigstellung dieser periodischen Echtzeitaufgaben zum Zeitpunkt **201** bzw. **202** wird die Schlüsselberechnung im Intervall **212** fortgesetzt, bis ein Ergebnis gefunden wird. Nach Vorliegen des neuen Schlüsselpaars wird der öffentliche Teil des neuen Schlüssels als Teil einer mit dem alten Schlüssel gesicherten Echtzeitnachricht einschließlich des Zeitpunkts, ab wann der neue Schlüssel verwendet wird, verteilt. Die Bekanntgabe des neuen Schlüssels erfolgt in einer Folge von n Nachrichten, um den Verlust von (n-1) Nachrichten tolerieren zu können.

Die vorab beschriebene Architektur zur Sicherung der Integrität und Authentizität der Echtzeitdaten kann auch verwendet werden, um die Vertraulichkeit von Daten zu gewährleisten. Wenn von einem Rechner, z.B. dem Rechner **111,** Daten an den Rechner **112** vertraulich geschickt werden sollen, so schickt der Rechner **112** den öffentlichen Teil eines asymmetrischen Schlüssels mittels einer entsprechend dem beschriebenen Verfahren die Authentizität und Integrität wahrenden Nachricht an den Rechner **111,** der dann die Daten mit diesem empfangenen Schlüssel zu einem Geheimtext verschlüsselt. Nun ist nur der Rechner **112,** der den geheimen Teil des asymmetrischen Schlüsselpaars kennt, in der Lage, aus dem Geheimtext den Klartext wieder herzustellen.

Die Länge des zur Verschlüsselung von vertraulichen Daten zu verwendenden asymmetrischen Schlüssels hängt von der Dauer ab, während der die Daten vertraulich behandelt werden müssen. Wenn diese Dauer sehr lang ist, muss ein langer Schlüssel gewählt werden. In Echtzeitsystem haben jedoch in vielen Fällen die Echtzeitdaten nach kurzer Dauer ihren Nutzen verloren, so dass oft ein kurzer Schlüssel ausreicht.

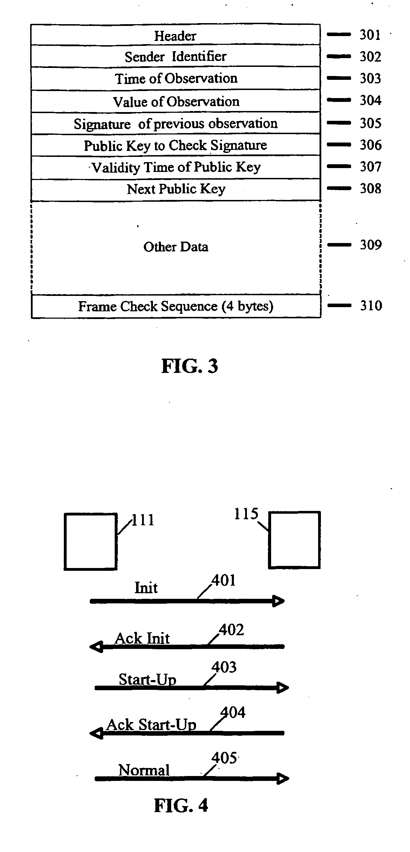

Fig. 3 zeigt den möglichen Aufbau einer Echtzeitnachricht. Nach dem Header **301** findet sich die Sender-ID im Feld **302,** der Zeitpunkt der Beobachtung im Feld **303,** der Wert der Beobachtung im Feld **304,** die Signatur über den gesamten Inhalt der Beobachtung der vorangegangenen Nachricht im Feld **305,** der zur Überprüfung der signatur der Nachricht zu verwendende öffentliche Schlüssel in Feld **306,** der Gültigkeitsendzeitpunkt dieses öffentlichen Schlüssels in Feld **307,** und der ab diesem Gültigkeitszeitpunkt anzuwendende neue Schlüssel im Feld **308.** Vor der Frame Check Sequence in Feld **310** befinden sich in Feld **309** sonstige, nicht sensible, Daten.

Erfindungsgemäß sendete der Security Monitor **114** eine periodische mit seiner Unterschrift signierte Nachricht an die Security Authority **115** oder eine andere Security Instanz, um über die in der vergangenen Periode durchgeführten Security-Überprüfungen zu berichten. Wenn diese periodische Nachricht über Security-Verletzungen berichtet oder die Nachricht ausbleibt, so ist von der Security Authority **115** ein Security Alarm auszulösen.

Wenn im Header **301** einer Nachricht ein spezielles Bit gesetzt ist, das bedeutet, dass in dieser Nachricht sensible Informationen enthalten sind, so ist diese Nachricht vom Switch **120** an den Security Monitor zu senden. Diese Funktion des Switches muss *tamper-resistant* ausgeführt sein. Eine Funktion ist *temper-resistant* implementiert, wenn es einer nicht autorisierten Instanz nicht möglich ist, die Funktion zu ändern.

Die Zeit ist eine besondere Art von vorhersehbarer Echtzeitinformation. Die Verteilung der Zeit in der Form einer Synchronisationsnachricht lässt sich somit mittels des beschriebenen Verfahrens sichern. Da die Signatur der Synchronisationsnachricht bereits vor dem Zeitpunkt, zu dem die Synchronisationsnachricht gesendet wird, errechnet werden kann, ist es möglich, den Zeitwert und die Signatur des Zeitwerts, in einer einzigen Synchronisationsnachricht zu senden.

Fig. 4 zeigt eine mögliche Nachrichtenfolge in einer gesicherten Startup-Phase des Rechners **111.** Unmittelbar nach *Power-up* des Rechners **111** sendet der Rechner **111** eine Initialisierungs (Init) Nachricht **401** an die Certification Authority (CA) **115.** Diese Init Nachricht **401** enthält die Sender-ID des Rechners 111. Die CA **115** überprüft, ob die Sender-ID in der ihr *a priori* bekannten Systemkonfiguration enthalten ist. Diese *a priori* bekannte Systemkonfiguration gibt an, welche Sender IDs in welcher Rolle in dem konkreten Echtzeitsystem Verwendung finden. Bei positivem Ausgang der Überprüfung antwortet die CA **115** mit einer Ack-Init Nachricht **402.** Die Ack-Init Nachricht **402** enthält die aktuelle Zeit, den aktuelle öffentlichen Schlüssel zur Überprüfung der Signatur des Zeitservers und eine Signatur, die mit dem geheimen Teil eines langen asymmetrischen Ack-Init Schlüsselpaars erstellt wurde. Dieser geheime Teil des Ack-Init Schlüsselpaars muss in der CA 115 *tamper-proof* implementiert sein. Eine Datenstruktur ist *tamper-proof* implementiert, wenn es nicht möglich ist, die Datenshuktur zu lesen ohne den Bauteil zu zerstören. Der Rechner **111** hat sicheres *a priori* Wissen über den öffentlichen Teil des Ack-Init Schlüsselpaars zur Überprüfung der Signatur dieser Ack-Init Nachricht **402** und überprüft mittels dieses Schlüssels, ob die Signatur mit dem Inhalt der Ack-Init **402** Nachricht übereinstimmt. Wenn diese Überprüfung positiv ist und die in der Init-Ack Nachricht enthaltene Zeit mit der Zeit vom Zeitserver übereinstimmt, schließt der Rechner **111,** dass er sich in einer *ordentlichen* Umgebung befindet und antwortet mit einer Start-up Nachricht **403,** die folgende Informationen enthält: die Sender-ID, den zu verwendenden öffentlichen Schlüssel zur Überprüfung der Signatur der vom Rechner **111** unmittelbar nach dem Startup produzierten Echtzeitnachrichten und den Zeitpunkt, ab wann dieser Schlüssel zu verwenden ist. Die Sicherung der Authentizität und Integrität dieser Start-up Nachricht **403** vom Rechner **111,** die nicht zeitkritisch ist, erfolgt durch eine Signatur mittels eines langen asymmetrischen Start-up Schlüsselpaars. Die Assoziation zwischen der Sender-ID und dem öffentliche Teil dieses Start-up Schlüsselpaars ist der CA *a priori* als sicher bekannt. Die Assoziationen zwischen dem öffentlichen langen Start-up Schlüsseln der Sender und der zugehörigen Sender-IDs müssen in der *Certification Authority* **115** *tamper-resistent* gespeichert sein. Eine Datenstruktur ist *temper-resistent* implementiert, wenn es einer nicht autorisierten Instanz nicht möglich ist, die Datenstruktur zu ändern. Die *Certification Authority* **115** kann auch von einem *Trusted Security Center* (oder einer ihm entsprechenden Instanz) die Assoziation zwischen Sender-ID **111** und dem öffentlichen Start-up Schlüssel zur Überprüfung der Signatur der Start-up Nachrichten **403** des Rechners **111** anfordern. Diese Verbindung zwischen dem *Trusted Security Center* und der *Certification Authority* **115** muss sicher sein. Diese Verbindung kann durch einen langen symmetrischen Schlüssel, den nur die *Certification Authority* **115** und das *Trusted Security Center* kennt, gesichert werden. Diese Verbindung ist von den normalen Wartungsarbeiten am Echtzeitsystem nicht betroffen. Nach Empfang der Startup Nachricht **403** vom Rechner **111** durch die CA **115** antwortet die CA mit einer Startup-Ack Nachricht **404,** die den Rechner **111** informiert, dass die Assoziation zwischen Sender-ID der Rechners **111** und dem öffentlichen Teil des Schlüssels zur Überprüfung der vom Rechner **111** produzierten Signaturen in der CA gespeichert ist. Nach Empfang der Startup-Ack Nachricht **404** durch den Rechner **111** beginnt der Rechner **111** mit dem Senden der normalen Echtzeitnachrichten **405.**

Auf Anfrage bestätigt die CA **115** jedem Anfrager die zu einem Zeitpunkt gültige Assoziation zwischen Sender-ID und öffentlichem Schlüssel eines Rechners zur Überprüfung der Signatur einer Nachricht des Senders mit der genannten Sender-ID.

Die Sender-ID und der öffentliche Teil des Ack-Init Schlüsselpaars müssen im Rechner **111** *tamper-resistent implementiert sein.* Der geheime Teil des langen asymmetrischen Start-up Schlüssels, der nach dem Startup verwendet wird, muss im Rechner **111** *tamper-proof* implementiert sein.

Die beschriebene Rechnerkonfiguration aus Fig. 1 kann auch auf einem Multiprozessor System-on-Chip (MPSoC) effizient realisiert werden, wobei die Funktion des Switches **120** von einem Network-on-Chip und die Funktion der Rechner **111,112** und **113** von den Cores des MPSoC übernommen wird. Ein ausgezeichnetes Core **114** übernimmt die Funktion des *Security Monitors* (Security Servers) und überprüft alle an den MPSoC gesendeten Daten auf ihre Integrität und Authentizität.

Die folgende Tabelle informiert über die Vertraulichkeitsanforderungen der in dieser Architektur zu speichernden security-relevanten Daten:

| Daten Element | Ort | Status | Implementierung |
|---|---|---|---|
| Öffentlicher Teil des Ack-Init Schlüsselpaars von der CA **115** | Rechner | public | Tamper resistant |
| Geheimer Teil des Ack-Init Schlüsselpaars | CA | geheim | Tamper proof |
| Öffentlicher Teil des Start-up Schlüsselpaars in Rechner **111** | CA | public | Tamper resistant |
| Geheimer Teil des Start-up Schlüsselpaars in Rechner **111** | Rechner | geheim | Tamper proof |
| Sender-ID in Rechner **111** | Rechner | public | Tamper resistant |
| Assoziation zwischen Sender ID und dem öffentlichen Teil des Start-up Schlüsselpaar von Rechner **111** | CA | public | Tamper resistant |

Die hier beschriebene konkrete Realisierung der Erfindung stellt nur eine von vielen Realisierungsmöglichkeiten dieser Erfindung dar.

Diese Erfindung bietet folgende ökonomische Vorteile:
- Die Authentizität und Integrität der in einem offenen Netzwerk übertragenen Echtzeitdaten wird gewährleistet.
- Die Qualität der Echtzeitdatenverarbeitung (Totzeit in Regelschleifen) wird durch die Sicherungsmaßnahmen nicht beeinträchtigt.
- Falls gewünscht kann auch die Vertraulichkeit der Echtzeitdaten hergestellt werden.
- Dieses Verfahren erfordert geringe Änderungen in der Architektur bestehender Echtzeitsysteme.
- Das Verfahren lässt sich auf den neuen MPSoCs effizient implementierten.

### Zitierte Patente:

[1] US 7,194,620 , March 20, 2007, Hayes, Method for real-time data authentication
[2] EP 1512254, Oct 5, 2005, Communication Method and System for Transmitting Timed and Event Driven Ethernet Messages

### Sonstige Literatur:

[3] IEEE Ethernet Standard 802.3 , URL: http://standards.ieee.org
[4] Wikipedia, RSA Kryptosystem, June 2007, URL: http://de.wikipedia.org/wiki/RSA-Kryptosystem
[5] IEEE Standard 1588 zur Uhrensynchronisation, URL: http://standards.ieee.org
[6] Kopetz, H. (1997). Real-Time Systems, Design Principles for Distributed Embedded Applications; ISBN: 0-7923-9894-7. Boston. Kluwer Academic Publishers.

## Patentansprüche

1. Verfahren zur Sicherung der Authentizität. Integrität und Vertraulichkeit von Echtzeitdaten in einem verteilten Echtzeitsystem, bestehend aus einer Vielzahl von Rechnern **(111, 112, 113, 114),** wobei jeder Rechner periodisch Echtzeitnachrichten mit Echtzeitdaten an die anderen Rechner senden kann, und wobei ein Rechner **(114)** die Rolle eines Security Servers übernimmt, und wo ein weiterer Rechner **(115)** die Rolle einer *Certification Authority* (*CA*) wahrnimmt, die die Authentizität des öffentlichen Schlüssel eines Rechners bestätigt, und wo alle Rechner Zugriff auf eine gemeinsame *sparse* Zeitbasis haben, und wo jeder Rechner über mindestens einen geheimen asymmetrischen Schlüssel zur Erstellung einer Signatur verfügt, und wo der zugehörige öffentliche Schlüssel, der zur Überprüfung der Authentizität und Integrität der signierten Datenstruktur erforderlich ist, von der *certification Authority (CA)* **(115)** anforderbar ist,
**dadurch gekennzeichnet, dass**
unmittelbar nach Power-up eines Rechners **(111)** ein sicheres Start-up Protokoll mit der *Certification Authority (CA)* **(115)** mit langen asymmetrischen Schlüsselpaaren abgewickelt wird, und wo nach Beendigung der Start-up Phase im Echtzeitbetrieb kurze asymmetrische Schlüsselpaare zur Sicherung der Authentizität und Integrität der Echtzeitdaten verwendet werden, wobei die Schlüsselpaare häufig geändert werden, und wobei, aufbauend auf die gesicherte Authentizität und Integrität der Daten, die Vertraulichkeit mit asymmetrischen Schlüsselpaaren gewährleistet wird, wobei die Länge der verwendeten Schlüssel von der Dauer abhängt, während der die Vertraulichkeit der Echtzeitdaten gewährleistet werden muss.

2. Verfahren nach Anspruch 1, **dadurch gekennzeichnet, dass** nach Beendigung der gesicherten Start-up Phase unmittelbar nach der Erfassung der Echtzeitdaten einer Beobachtung eine Echtzeitnachricht, die die Beobachtung im Klartext enthält, gebildet und übertragen wird, und wo in der nächsten periodischen Echtzeitnachricht eine Signatur über die in der vorangegangen Echtzeitnachricht übermittelte Beobachtung enthalten ist, wobei diese Signatur unter Verwendung des nur dem sendenden Rechner bekannten geheimen Schlüssel erstellt wurde und mit dem zugehörigen öffentlichen Schlüssel überprüft werden kann.

3. Verfahren nach Anspruch 1 oder 2, **dadurch gekennzeichnet, dass** in einem die Daten empfangenden Rechner ein dedizierter Prozess unter Verwendung des öffentlichen Schlüssels feststellt, ob die in einer Periode empfangenen Daten mit der in der nächsten Periode empfangenen zugehörigen Signatur übereinstimmen.

4. Verfahren nach einem der Ansprüche 1 bis 3, **dadurch gekennzeichnet, dass** der öffentliche Schlüssel zur Überprüfung der Integrität und Authentizität der Daten einer Echtzeitnachricht Teil der Echtzeitnachricht ist.

5. Verfahren nach einem der Ansprüche 1 bis 4, **dadurch gekennzeichnet, dass** der dedizierte Prozess, der die Überprüfung der Echtzeitdaten vornimmt, durch Kommunikation mit der *Certification Authority* (**115**) überprüft, ob der in einer Echtzeitnachricht enthaltene öffentliche Schlüssel authentisch ist.

6. Verfahren nach einem der Ansprüche 1 bis 5, **dadurch gekennzeichnet, dass** der geheime Schlüssel zur Erstellung der Signatur und der öffentliche Schlüssel zur Überprüfung der Signatur im Echtzeitbetrieb immer wieder geändert werden.

7. Verfahren nach einem der Ansprüche 1 bis 6, **dadurch gekennzeichnet, dass** ein sendender Prozess, sobald die Echtzeitverarbeitung einer Periode abgeschlossen ist, im Background ein neues asymmetrisches Schlüsselpaar generiert und den neuen öffentlichen Schlüssel einschließlich dessen Gültigkeitsbeginnzeitpunkts in mehreren mit dem alten Schlüssel signierten Echtzeitnachrichten vor Ablauf der Gültigkeit des alten Schlüssels ankündigt, und wo der sendende Prozess ab dem angegebenen Gültigkeitsbeginnzeitpunkt den nur ihm bekannten geheimen Teil des Schlüssels zur Erstellung der Signatur einer Beobachtung verwendet.

8. Verfahren nach einem der Ansprüche 1 bis 7, **dadurch gekennzeichnet, dass** unmittelbar nach *Power-up* eines Rechners **(111)** dieser Rechner eine Initialisierungs(Init)-Nachricht **(401)** mit seiner Sender-ID an die Certification Authority (CA) **(115)** sendet und wo die Certification Authority (CA) **(115)** überprüft, ob diese Sender-ID in der ihr *a priori* bekannten Systemkonfiguration enthalten ist, und wobei die Certification Authority (CA) **(115)** bei positivem Ausgang der Überprüfung mit einer Ack-Init Nachricht **(402)** antwortet, die die aktuelle Zeit, den aktuellen öffentlichen Schlüssel zur Überprüfung der Signatur eines Zeitservers und eine Signatur, die mit dem geheimen Teil eines langen asymmetrischen Ack-Init Schlüsselpaars erstellt wurde, enthält, und wo der geheime Teil des Ack-Init Schlüsselpaars in der Certification Authority (CA) **(115)** *tamper-proof* implementiert ist, und wo der Rechner **(111)** den öffentlichen Teil des Ack-Init Schlüsselpaars zur Überprüfung der Signatur dieser Ack-Init Nachricht **(402)** *a priori* kennt, und wo der Rechner (111) mittels dieses Schlüssels überprüft, ob die Signatur und der Inhalt der Ack-Init **(402)** Nachricht übereinstimmen, und wo der Rechner **(111)** weiters überprüft ob, die in der Ack-Init Nachricht enthaltene Zeit mit der sicheren Zeit von einem Zeitserver übereinstimmt, und, falls diese Überprüfungen positiv sind, der Rechner **(111)** mit einer Start-up Nachricht **(403)** an die Certification Authority (CA) **(115)** antwortet, wobei die Start-up Nachricht **(403)** die Sender-ID des Rechners **(111),** den zu verwendenden öffentlichen Schlüssel zur Überprüfung der Signatur der vom Rechner **(111)** unmittelbar nach dem Startup produzierten Nachrichten und den Zeitpunkt, ab wann dieser Schlüssel zu verwenden ist, enthält, und wo die Sicherung der Authentizität und Integrität dieser Start-up Nachricht durch eine vom Rechner **(111)** erstellte Signatur mittels eines langen asymmetrischen Start-up Schlüsselpaars erfolgt, wobei der geheime Teil dieses Schlüsselpaars im Rechner **(111)** *tamper-proof* gespeichert ist, und wo die Assoziation zwischen der Sender-ID und dem öffentliche Teil dieses Start-up Schlüsselpaars der *Certification Authority* **(115)** a *priori* als sicher bekannt ist, und wo diese Assoziationen in der *Certification Authority* **(115)** *tamper-resistant* gespeichert sind, und wo *Certification Authority* **(115)** mit einer Start-up ack Nachricht **(404)** antwortet, bevor der Rechner (111) mit der normalen Echtzeitverarbeitung beginnt.

9. Verfahren nach einem der Ansprüche 1 bis 8, **dadurch gekennzeichnet, dass** ein *trusted security center* der *Certification Authority* **(115)** über einen gesicherten Kanal die Assoziation zwischen der im Rechner **(111)** *tamper-resistant* gespeicherten Sender-ID und den nach dem Startup zu verwenden öffentlichen Schlüssel zur Überprüfung der Signatur der Nachricht des Senders mitteilt, wobei der geheime Teil dieses Schlüssel im Rechner **(111)** *tamper-proof gespeichert* ist.

10. Verfahren nach einem der Ansprüche 1 bis 9, **dadurch gekennzeichnet, dass** ein sendender Rechner **(111)** das Bitmuster des Zeitpunkts des Beginns der neuen Schlüsselerstellung als Ausgangswert für die Berechnung einer neuen Zufallszahl verwendet.

11. Verfahren nach einem der Ansprüche 1 bis 10, **dadurch gekennzeichnet, dass** zum vertraulichen übertragen von Daten auf einen Rechner **(112)** dieser Rechner **(112)** den öffentlichen Teil eines asymmetrischen Schlüsselpaars an den Sender **(111)** der vertraulichen Daten entsprechend einem Verfahren nach einem der Ansprüche 1 bis 10 sendet, welcher Sender **(111)** dann unter Verwendung des empfangenen Schlüssels einen Geheimtext generiert und an den den öffentlichen Teil eines asymmetrischen Schlüsselpaares sendenden Rechner **(112)** zurücksendet.

12. Verfahren nach einem der Ansprüche 1 bis 11, **dadurch gekennzeichnet, dass** der Sender von vertraulichen Daten die Länge des zur Verschlüsselung der Daten zu verwendenden Schlüssels von der Dauer abhängen lässt, während der die Daten als *vertraulich* zu behandeln sind.

## Claims

1. A method for safeguarding authenticity, integrity and confidentiality of real-time data in a distributed real-time system, comprising a plurality of computers **(111, 112, 113, 114),** whereby each computer can periodically send real-time messages with real-time data to the other computers, and whereby one computer **(114)** takes over the role of a security server, and another computer **(115)** assumes the role of a certification authority (CA) that establishes the authenticity of the public key of a computer, and where all computers have access on a common sparse time base, and where each computer has at least one private asymmetric key available for creation of a signature that is required for checking the authenticity and integrity of the signed data structure, which can be requested from the certification authority (CA) (115),
wherein
a secure startup protocol with a long asymmetric key pair is processed with the certification authority (CA) **(115)** immediately after power-up of a computer **(111),** and where short asymmetric key pairs are used for safeguarding the authenticity and integrity of the real-time data in real-time operation after the end of the startup phase, whereby the key pairs are changed frequently, and whereby confidentiality is ensured with asymmetric key pairs based on the secured authenticity and integrity of the data, whereby the length of the key used depends on the period of time during which the confidentiality of the real-time data must be ensured.

2. The method as recited in Claim 1, wherein after the end of the startup phase immediately after acquisition of the real-time data of an observation, a real-time message that contains the observation in plain text will be composed and sent, and where the next periodic real-time message contains a signature for the observation conveyed in the preceding real-time message, whereby this signature is created through the use of the private key known only to the sending computer and can be checked against the associated public key.

3. The method as recited in Claim 1 or Claim 2, wherein a dedicated process in one of the computers receiving the data uses the public key to determine whether the data received in one period matches the signature associated with the data received in the next period.

4. The method as recited in Claims 1 through 3, wherein the public key for checking the integrity and authenticity of the data of a real-time message is a portion of the real-time message.

5. The method as recited in one of Claims 1 through 4, wherein the dedicated process that undertakes the checking of the real-time data checks whether the public key contained in a real-time message is authentic through communication with the certification authority (CA) **(115).**

6. The method as recited in one of Claims 1 through 5, wherein the private key for creating the signature and the public key for checking the signature are continually changed during real-time operation.

7. The method as recited in one of Claims 1 through 6, wherein, as soon as the time period for a real-time operation is completed, a sending process generates a new asymmetric key pair in the background and announces the new public key including the time point when its validity period begins in a plurality of real-time messages signed with the old key prior to the expiration of the old key's validity, and where the sending process uses the private portion of the key known only to itself to create the signature starting from the given time point when the validity period begins.

8. The method as recited in one of Claims 1 through 7, wherein, immediately after power-up of a computer **(111),** this computer send an initialization (Init) message **(401)** with its sender ID to the certification authority (CA) **(115),** and where the certification authority (CA) **(115)** checks whether this sender ID is contained in its a priori known system configuration, and whereby with a positive outcome for the check, the certification authority (CA) **(115)** responds with an Ack-Init message **(402)** that contains the current time, the current public key for checking the signature of a time server and a signature that is created with the private portion of a long asymmetric Ack-Init key pair, and where the private portion of the Ack-Init key pair is implemented in the certification authority (CA) **(115)** in a tamper-proof manner, and where the computer **(111)** knows a priori the public portion of the Ack-Init key pair for checking the signature of the Ack-Init **(402)** message, and where the computer **(111)** uses this key to check whether the signature and the content of the Ack-Init **(402)** message are in agreement, and where the computer further checks whether the time contained in the Ack-Init message agrees with the secure time from the time server, and in the case the result of these check is positive the computer responds to the certification authority (CA) **(115)** with a startup message **(403),** whereby the startup message **(403)** contains the sender ID of the computer **(111),** the public key to be used for checking the signature of the messages produced by the computer **(111)** immediately after startup, and the time point from which this key is to be used, and where the safeguarding of authenticity and integrity takes place through a signature created by the computer **(111)** using a long asymmetric startup key pair, whereby the private portion of this key pair is stored in computer **(111)** in a tamper-proof manner, and where the association between the sender ID and the public portion of this startup key pair is known a priori by the certification authority **(115)** to be secure, and where these associations are stored in the certification authority **(115)** in a tamper-resistant manner, and where the certification authority **(115)** responds with a startup Ack message **(404)** before the computer **(111)** begins with normal real-time processing.

9. The method as recited in one of Claims 1 through 8, wherein a trusted security center of the certification authority **(115)** communicates via a secure channel the association between the sender ID stored in a tamper-proof manner in computer **(111)** and the public key to be used after startup for checking the signature of the sender's message, whereby the private portion of this key is stored in a tamper-proof manner in computer **(111).**

10. The method as recited in one of Claims 1 through 9, wherein a sending computer (111) uses the bit pattern of the time point for beginning the creation of a new key as the starting value for the calculation of a new random number.

11. The method as recited in one of Claims 1 through 10, wherein for the confidential transmission of data on a computer **(112),** this computer **(112)** sends to the sender **(111)** of the confidential data the public portion of an asymmetric key pair corresponding to a method as recited in one of Claims 1 through 10, where said sender **(111)** then generates a private text using the received key and sends it back to the computer **(112)** that sent the public portion of an asymmetric key pair.

12. The method as recited in one of Claims 1 through 11, wherein the sender of confidential data allows the length of the key used for encryption of the data depend on the period of time during which the data is to be treated as confidential.

## Revendications

1. Procédé de sécurisation de l'authenticité, de l'intégrité et de la confidentialité de données en temps réel dans un système temps réel partagé constitué d'une pluralité d'ordinateurs (111, 112, 113, 114), chaque ordinateur pouvant adresser périodiquement des messages en temps réel avec des données en temps réel aux autres ordinateurs, où un ordinateur (114) assume la fonction d'un serveur de sécurité, où un autre ordinateur (115) assume la fonction d'une autorité de certification (CA) qui confirme l'authenticité de la clé publique d'un ordinateur, où tous les ordinateurs ont accès à une base temporelle éparse commune, où chaque ordinateur dispose au moins d'une clé asymétrique secrète pour la création d'une signature, et où la clé publique correspondante, exigée pour le contrôle de l'authenticité et de l'intégrité de la structure de données signée est appelable par l'autorité de certification (CA) (115),
**caractérisé**
**en ce qu'**immédiatement après la mise sous tension d'un ordinateur (111), un protocole de démarrage sécurisé avec l'autorité de certification (CA) (115) est exécuté avec des clés doubles asymétriques longues, et en ce qu'à l'issue de la phase de démarrage en fonctionnement en temps réel, des clés doubles symétriques courtes sont utilisées pour la sécurisation de l'authenticité et de l'intégrité des données en temps réel, les clés doubles étant fréquemment modifiées, la confidentialité étant assurée par des clés doubles asymétriques sur la base de la sécurisation de l'authenticité et de l'intégrité des données, la longueur des clés utilisées étant fonction de la durée pendant laquelle la confidentialité des données en temps réel doit être assurée.

2. Procédé selon la revendication 1, **caractérisé en ce qu'**à l'issue de la phase de démarrage sécurisée, immédiatement après la saisie des données en temps réel d'une observation, un message en temps réel contenant l'observation en texte clair est formé et transmis, et **en ce qu'**une signature sur l'observation communiquée dans le message en temps réel précédent est contenue dans le message en temps réel périodique suivant, cette signature ayant été créée en utilisant la clé secrète connue seulement de l'ordinateur émetteur et pouvant être contrôlée avec la clé publique correspondante.

3. Procédé selon la revendication 1 ou la revendication 2, **caractérisé en ce que**, dans un ordinateur recevant les données, un processus dédié constate en utilisant la clé publique si les données reçues pendant une période concordent avec la signature correspondante reçue pendant la période suivante.

4. Procédé selon l'une des revendications 1 à 3, **caractérisé en ce que** la clé publique pour le contrôle de l'intégrité et de l'authenticité des données d'un message en temps réel est une partie du message en temps réel.

5. Procédé selon l'une des revendications 1 à 4, **caractérisé en ce que** le processus dédié, qui procède au contrôle des données en temps réel, vérifie par communication avec l'autorité de certification (115) si la clé publique contenue dans un message en temps réel est authentique.

6. Procédé selon l'une des revendications 1 à 5, **caractérisé en ce que** la clé secrète pour la création de la signature et la clé publique pour le contrôle de la signature sont modifiées sans cesse en fonctionnement en temps réel.

7. Procédé selon l'une des revendications 1 à 6, **caractérisé en ce qu'**un processus émetteur génère une nouvelle clé double asymétrique en arrière-plan dès que le traitement en temps réel d'une période est terminé, et annonce la nouvelle clé publique, y compris le moment de début de validité de celle-ci, dans plusieurs messages en temps réel signés avec l'ancienne clé, avant l'expiration de la validité de l'ancienne clé, et **en ce que** le processus émetteur utilise la partie connue de lui seulement de la clé à partir du moment de début de validité indiqué, pour créer la signature d'une observation.

8. Procédé selon l'une des revendications 1 à 7, **caractérisé en ce qu'**immédiatement après la mise sous tension d'un ordinateur (111), ledit ordinateur adresse un message d'initialisation (Init) (401) avec son identifiant d'émetteur à l'autorité de certification (CA) (115), **en ce que** l'autorité de certification (CA) (115) contrôle si cet identifiant d'émetteur est compris dans la configuration système connue d'elle a priori, **en ce qu'**en cas d'issue positive du contrôle, l'autorité de certification (CA) (115) répond par un message Ack-Init (402) contenant le temps actuel, la clé publique actuelle pour le contrôle de signature d'un serveur temporel et une signature créée avec la partie secrète d'une clé double Ack-Init asymétrique longue, **en ce que** la partie secrète de la clé double Ack-Init est implémentée de manière inviolable dans l'autorité de certification (CA) (115), **en ce que** l'ordinateur (111) connaît a priori la partie publique de la clé double Ack-Init pour le contrôle de la signature de ce message Ack-Init (402), **en ce que** l'ordinateur (111) vérifie au moyen de cette clé si la signature et le contenu du message Ack-Init (402) concordent, **en ce que** l'ordinateur (111) vérifie en outre si le temps contenu dans le message Ack-Init correspond au temps sécurisé du serveur temporel, et, si ces contrôles s'avèrent positifs, l'ordinateur (111) répond par un message Start-up (403) à l'autorité de certification (CA) (115), ledit message Start-up (403) contenant l'identifiant d'émetteur de l'ordinateur (111), la clé à utiliser pour le contrôle de la signature des messages produits par l'ordinateur (111) immédiatement après le démarrage et le moment à partir duquel cette clé est à utiliser, **en ce que** la sécurisation de l'authenticité et de l'intégrité de ce message Start-up est effectuée par une signature créée par l'ordinateur (111) au moyen d'une clé double Start-up asymétrique longue, la partie secrète de cette clé double étant mémorisée de manière inviolable dans l'ordinateur (111), **en ce que** l'association entre l'identifiant d'émetteur et la partie publique de cette clé double Start-up est a priori connue comme sûre par l'autorité de certification (115), **en ce que** ces associations sont mémorisées de manière inviolable dans l'autorité de certification (115), et **en ce que** l'autorité de certification (115) répond par un message Start-up Ack (404), avant que l'ordinateur (111) commence le traitement en temps réel normal.

9. Procédé selon l'une des revendications 1 à 8, **caractérisé en ce qu'**un centre de sécurité certifié de l'autorité de certification (115) communique par un canal sécurisé l'association entre l'identifiant d'émetteur mémorisé de manière inviolable dans l'ordinateur (111) et la clé publique à utiliser après le démarrage pour le contrôle de la signature du message de l'émetteur, la partie secrète de cette clé ordinateur (111) étant mémorisée de manière inviolable dans l'ordinateur.

10. Procédé selon l'une des revendications 1 à 9, **caractérisé en ce qu'**un ordinateur émetteur (111) utilise la trame de bits du moment du début de la nouvelle création de clé comme valeur initiale pour le calcul d'un nouveau nombre aléatoire.

11. Procédé selon l'une des revendications 1 à 10, **caractérisé en ce que**, pour la transmission confidentielle de données à un ordinateur (112), cet ordinateur (112) adresse la partie publique d'une clé double asymétrique à l'émetteur (111) des données confidentielles conformément à un procédé selon l'une des revendications 1 à 10, ledit émetteur (111) générant alors un texte secret en utilisant la clé reçue et retournant celui-ci à l'ordinateur (112) adressant la partie publique d'une clé double asymétrique.

12. Procédé selon l'une des revendications 1 à 11, **caractérisé en ce que** l'émetteur de données confidentielles fait dépendre la longueur de la clé à utiliser pour le codage des données de la durée pendant laquelle les données sont à traiter comme confidentielles.
